# EUROPÄISCHE PATENTSCHRIFT

(11) **EP 1 493 316 B1**
(45) Veröffentlichungstag und Bekanntmachung des Hinweises auf die Patenterteilung: **13.02.2008**
(21) Anmeldenummer: 04014941.1
(22) Anmeldetag: 25.06.2004
(51) Int. Cl.: A01C 21/00

(54) **Vorrichtung zur Messung der Pflanzenbestandsdichte**
Apparatus for measuring the density of the vegetation
Dispositif de mesure de la densité de couverture vegetal

(30) Priorität: 01.07.2003 DE 10329472; 23.10.2003 DE 10349324
(43) Veröffentlichungstag der Anmeldung: 05.01.2005
(73) Patentinhaber: Amazonen-Werke H. Dreyer GmbH & Co. KG, 49205 Hasbergen (DE)
(72) Erfinder: Marquering, Johannes, Dr. Dipl.-Ing., 49176 Borgloh (DE); Linz, Andreas, Dipl.-Ing., 49076 Osnabrück (DE); Ruckelshausen, Arno, Prof. Dr., 49080 Osnabrück (DE)

(56) Entgegenhaltungen:
- WO-A-03/010535
- DE-A- 19 723 770
- US-A- 5 585 626
- US-A1- 2003 019 151
- US-B1- 6 444 975

## Beschreibung

Die Erfindung betrifft eine Vorrichtung zur Messung der Pflanzenbestandsdichte gemäß des Oberbegriffes des Patentanspruches 1.

In der DE 195 28 663 A1 wird ein Verfahren zur Einstellung einer mobilen Arbeitsmaschine, u.a. auch eines Düngerstreuers, also einer Verteilmaschine beschrieben. Hierbei wird mittels eines geeigneten Sensors eine Vorfeldabtastung durchgeführt, um u.a. die Bestandshöhe oder den zu erwartenden Ertrag zu ermitteln.

Eine ähnliche Vorrichtung ist auch aus der WO 03/010535 bekannt.

Der Erfindung liegt die Aufgabe zugrunde, ein preiswertes Sensorsystem zur Grünmassenbestimmung vorzuschlagen.

Diese Aufgabe wird erfindungsgemäß durch die kennzeichnenden Merkmale des Patentanspruches 1 gelöst. Infolge dieser Maßnahmen kann in einfacher Weise mit einem preiswerten Sensor oder mehrerer preiswerter Sensoren die Grünmasse bestimmt werden. Die Grünmasse ist ein Maß für die Bestandsdichte. Anhand der ermittelten Werte lässt sich die erforderliche Düngemittelmenge ermitteln. Aufgrund der ermittelten Werte kann dann die Verteilmaschine entsprechend eingestellt werden, um eine optimale Düngemittelausbringung entsprechend der tatsächlich ermittelten Grünmasse zu ermöglichen.

Besonders gute Werte lassen sich ermitteln, wenn in der Auswertung Elemente zur Filterung der Daten und der Lichtsignale vorgenommen werden. Viele der zum Einsatz kommenden Sensortypen haben einen Fehlerausgang, so dass man die entsprechenden Signale softwaremäßig über eine Filterung ausblenden kann. Eine derartige Filterung sowie gegebenenfalls andere softwaremäßige Reduktionen der Messdaten sind als Zwischenschritt der Datenauswertung, z.B. als "Datenfilterung" in vielen Fällen wichtig.

Unter einem optoelektronischen Abstandssensor wird ein optoelektronischer Sensor oder optoelektronisches Sensorsystem zur Abstandsmessung verstanden, wie dieses u.a. Triangulationssensoren, Lasersensoren zur Abstandsmessung, Laufzeitsensoren sind.

Die ermittelten Daten, die von den Sensoren ermittelt werden, lassen sich neben der Ermittlung des standortspezifischen Düngerbedarfs und dessen Verteilung auch auf andere Gebiete einsetzen. Es kann beispielsweise die Spurtiefe ermittelt werden, die Korrelation zum Ertrag, Hindernisse können erkannt werden und es können beispielsweise Versuchsflächen ausgewertet werden.

Eine einfache Ermittlung der Pflanzenbestandsdichte, d.h. der Grünmasse wird mittels eines Auswerteprogramms in einfacher Weise dadurch erreicht, dass in dem Auswerteprogramm ein statistisches Verhältnis zwischen Anzahl "Boden"-Signale und "Pflanzen"-Signale abgelegt ist und anhand dieses hinterlegten Verhältnisses durch den Abgleich mit den aktuell ermittelten Verhältnissen die tatsächliche Bestandsdichte online ermittelt und aufgrund der online ermittelten Werte mittels eines hinterlegten Programms die Verteilmaschine entsprechend einstellbar ist.

Hierbei wird dann aus der ermittelten Bestandsdichte mittels des hinterlegten Programms der standortspezifische Düngerbedarf ermittelt und die Verteilmaschine entsprechend eingestellt.

Wie bereits vor erwähnt, können die optoelektronischen Abstandssensoren als Triangulationssensor, Laufzeitsensoren, Scanner, Lasersensor ausgebildet sein. Es können ein oder mehrere Sensoren vorgesehen sein.

Das verallgemeinerte Prinzip lässt sich folgender Maßen darstellen:

Der Sensor sendet Licht aus (z.B. LED- oder Laserlicht, bevorzugt im IR-Bereich; es gibt aber auch Sensoren mit Weißlicht). Das Licht kann kontinuierlich oder gepulst ausgesendet werden.

Das reflektierte Licht wird gemessen. Dies kann über das Triangulationsprinzip (für kontinuierliches Licht) oder über die Laufzeit (für gepulstes Licht) geschehen. Die Auswertung der Triangulations- oder Laufzeitmessung ergibt den Abstand.

Bei den Triangulationssensoren gibt es neben dem klassischen Zweitstrahlprinzip auch ein Dreistrahl-Prinzip mit höherer Genauigkeit. Hier wird ein zweites positionsempfindliches Element symmetrisch zum gesendeten Lichtstrahl eingebaut. Solche Sensoren (z.B. von der Firma Wenglor) sind extrem unempfindlich gegenüber Störlicht oder Änderungen der Oberflächenbeschaffenheit.

Des weiteren kann auch ein Scanner als Sensor eingesetzt werden. Erweitert man die punktförmige Erfassung eines optoelektronischen Abstandssensors auf viele Messpunkte in einer Zeile, so erhält man einen Abstands-Scanner zur kompletten Profilmessung (ähnlich einem optischen Scanner mit einer CCD-Zeile). Beim senkrechten Einbau entspricht dies in der Funktion einer Vielzahl von Triangulationssensoren. Es können mehrere optoelektronische Abstandssensoren in Form eines Zeilenscanners ausgebildet sein.

Des weiteren sind auch 3 D-Kameras einsetzbar, die eine flächenhafte Abstandsinformation liefern. Verwendet man einen einzelnen Lasersensor und verändert dessen Position, so kann man ebenfalls ein Profil messen.

Weitere Einzelheiten der Erfindung sind der Beispielsbeschreibung und den Zeichnungen zu entnehmen. Hierbei zeigen
- Fig. 1: die Anordnung des Sensors an einer Verteilmaschine in Seitenansicht und in Prinzipdarstellung,
- Fig. 2: eine weitere Anordnung der Sensoren bezüglich einer Verteilmaschine in der Draufsicht,
- Fig. 3: eine weitere Anordnung der Sensoren bezüglich einer Verteilmaschine in der Draufsicht und in Prinzipdarstellung,
- Fig. 4: eine weitere Darstellung der Anordnung der Sensoren bezüglich einer Verteilmaschine in Prinzipdarstellung und in der Draufsicht,
- Fig. 5: Darstellung eines Messprinzips für einen als Zweistrahl-Triangulationssensor ausgebildete optoelektronischen Abstandssensor,
- Fig. 6: die Auswertung der Daten in einem Funktionsablaufdiagramm,
- Fig. 7: das Messprinzip anhand eines Getreidebestandes und
- Fig. 8: die Darstellung der Signale in einem Diagramm.

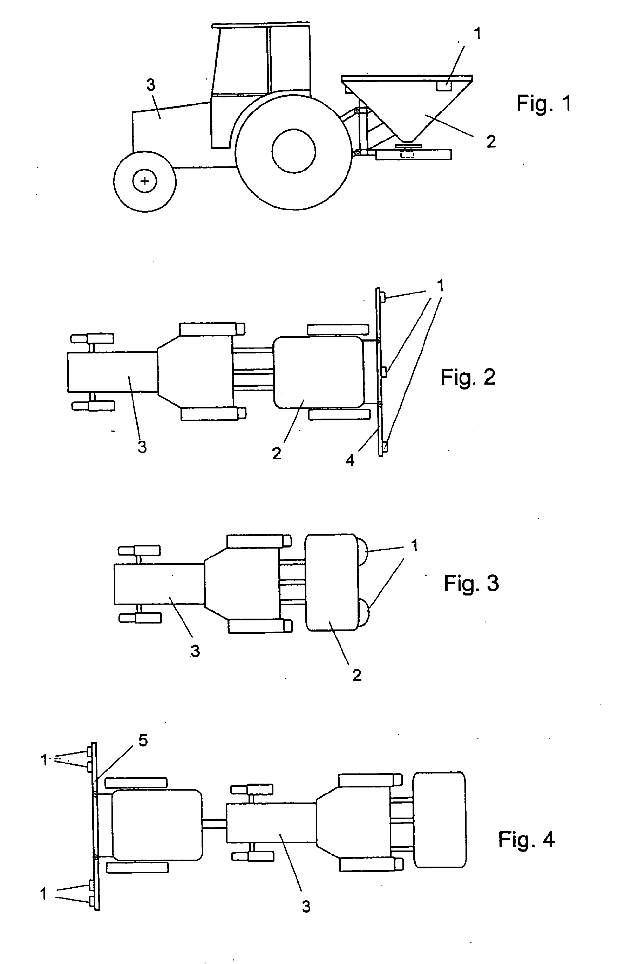

Bei der Ausführung nach Fig. 1 ist der Sensor 1 der Vorrichtung zur Messung der Pflanzenbestandsdichte seitlich an einer Verteilmaschine 2 angeordnet. Diese Verteilmaschine 2 wird von einem Schlepper 3 über den Acker getragen.

Gemäß Fig. 2 ist der Sensor 1 der Vorrichtung zur Messung der Pflanzenbestandsdichte an einem Gestänge 4 hinter einer Verteilmaschine 2, die von einem Ackerschlepper 3 getragen wird angeordnet. Bei dieser Vorrichtung sind insgesamt drei Sensoren 1 vorgesehen.

Gemäß Fig. 3 sind die Sensoren 1 der Vorrichtung zur Messung der Pflanzenbestandsdichte an den hinteren seitlichen Enden einer Verteilmaschine 2 angeordnet. Diese Verteilmaschine 2 wird von einem Schlepper 3 über den Acker getragen.

Gemäß Fig. 4 sind die Sensoren 1 der Vorrichtung zur Messung der Pflanzenbestandsdichte an einem Gestänge 5, welches sich auf der Vorderseite des Ackerschleppers 2 befindet, welches eine Verteilmaschine 2 trägt angeordnet.

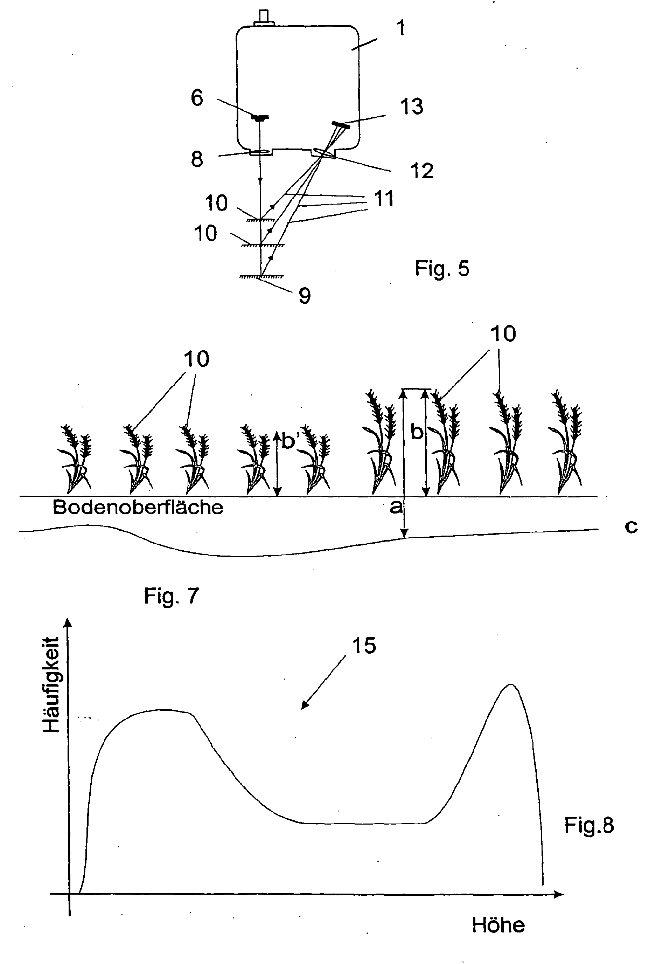

Der Sensor 1 zur Messung der Pflanzenbestandsdichte ist als optoelektronischer Abstandssensor, beispielsweise als Triangulationssensor ausgebildet. Dabei werden Sensoren verwendet, die kontinuierliches oder gepulstes Licht (LED, Laser, Weißlicht) aussenden und das reflektierte Licht messen. Messprinzipien sind die Triangulation (Zweistrahl- oder Dreistrahlprinzip) oder die Laufzeitmessung. Das Funktionsprinzip eines Zweistrahl-Triangulationssensorsdieses Sensors ist als Beispiel in Fig. 5 dargestellt. Der Triangulationssensor 1 weist eine als Sender ausgebildete lichtaussendende Laserdiode 6 auf. Diese Laserdiode 6 sendet das Licht 7 durch eine Linse 8 der Optik in Richtung des Bodens 9 und der Pflanzen 10. Das zurückgeworfene Licht 11 wird durch die Empfangslinse 12 der Optik geleitet und gelangt auf den als Empfänger ausgebildeten Positionssensor 13. Über die als Linse 8 ausgebildete Objektiv wird ein Lichtpunkt auf das Messobjektiv, Boden, Pflanze projeziert und wird von dort diffus reflektiert. Dieser Punkt wird über das Objektiv 12 auf den Positionssensor 13 (Empfänger) abgebildet. Der Positionssensor 13 liefert eine positionsabhängige analoge Ausgangsspannung, die dem Messweg (Abstandssensor Messobjekt) proportional ist.

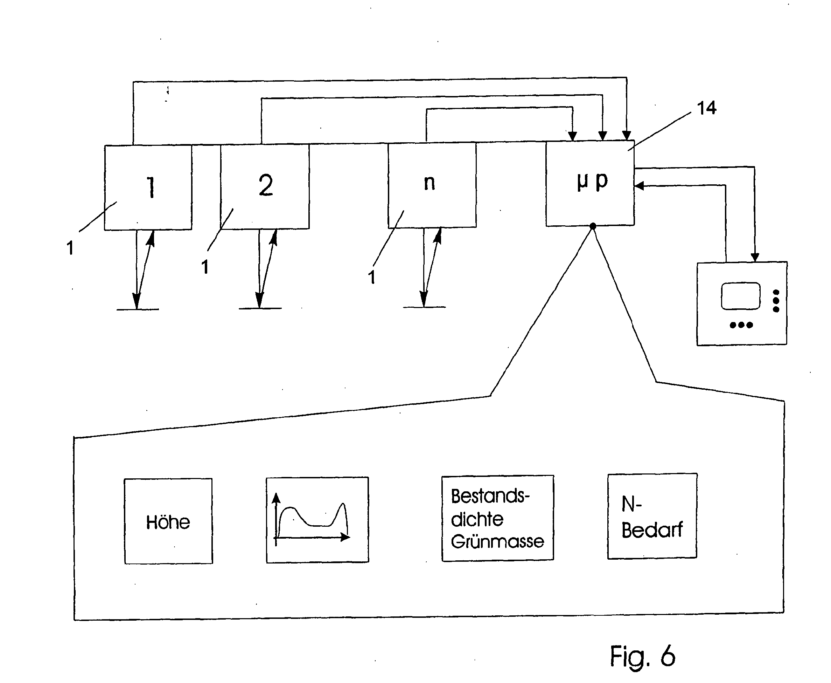

Die Fig. 6 zeigt das Auswerteprinzip der von dem verschiedenen Sensoren 1 empfangenen Wert und der übermittelten Messwerte an einen elektronischen Rechner. Je nach Anzahl der Sensoren werden die Messwerte in dem Controller 14 ausgewertet und errechnet. In diesem Controller 14 wird aus der Höhenmessung während der Überfahrt die Bestandeshöhe ermittelt. Fehlerhafte Daten können über eine softwaremäßige Filterung eliminiert werden. Aufgrund ders vorgeschilderten Messprinzipiens der optoelektronischen Abstandssensorendes Triangulationssensors wird die in Fig. 8 abgebildete statistische Verteilung 15 der Sensorsignale erreicht.

In Fig. 7 ist die Ermittlung der Bestandeshöhe B dargestellt, wobei der Abstand a die Pflanzenhöhe b plus der Fahrspurtiefe c des Schleppers ist. Neben der absoluten Bestandeshöhe b, b' ergibt sich aufgrund der Statistik das Verhältnis zwischen der Anzahl der Bodentreffer und der Bestandestreffer, aus denen sich die Bestandeshöhe entsprechend Fig. 6 ermitteln lässt. Aus der Korrelation zwischen Bestandeshöhe und Dichte des Bestandes werden Rückschlüsse auf die Düngerversorgung der Pflanzen gezogen.

Insbesondere wie sich aus Fig. 6 ergibt, erfolgt die Messung zur Bestimmung der Grünmasse des Pflanzenbestandes mittels eines oder mehrerer als Triangulationssensor 1 ausgebildeter optoelektronischer Abstandssensoren. Diese als Triangulationssenoren ausgebildeten Abstandssensoren, die einen Sender 6 und Empfänger 13 aufweisen, liefern entsprechende Signale an einen Bordcomputer. Mittels des Sensors 1 lässt sich die Bestandeshöhe des Pflanzenbestands ermitteln. Aus den Signalen ist mittels eines im Bordcomputer in einem Speichermedium abgelegten Auswerteprogramms die Pflanzenbestandsdichte ermittelbar.

In dem Auswerteprogramm ist ein statistisches Verhältnis zwischen Anzahl Bodensignalen und Pflanzensignalen abgelegt. Anhand dieses hinterlegten Verhältnisses wird durch den Abgleich mit den aktuell ermittelten Verhältnissen die tatsächliche Bestandesdichte, d.h. die Grünmasse online ermittelt. Aufgrund der Online ermittelten Werte ist mittels eines hinterlegten Programms die Verteilmaschine entsprechend einstellbar. Somit ist aus der ermittelten Bestandsdichte mittels des hinterlegten Programms der standortspezifische Düngerbedarf ermittelbar. Die Verteilmaschine wird entsprechend einzustellen, damit der ermittelte Düngemittelbedarf durch die Verteilmaschine ausgebracht wird.

## Patentansprüche

1. Vorrichtung zur Messung der Pflanzenbestandsdichte, insbesondere der Grünmasse des Pflanzenbestandes einer landwirtschaftlichen Bestandsfläche zur Steuerung und/oder Regelung einer landwirtschaftlichen Verteilmaschine (2), wobei die Vorrichtung mindestens einen Signale an einen Bordcomputer liefernden Sensor (1) mit einem Sender (6) und einem Empfänger (13) aufweist, wobei der Sensor (1) als optoelektronischer Abstandssensor ausgebildet ist, **dadurch gekennzeichnet, dass** mittels des Sensors (1) die absolute Bestandshöhe des Pflanzenbestandes (b,b') ermittelbar ist, dass aus den Signalen mittels eines im Bordcomputer in einem Speichermedium abgelegten Auswerteprogramms die Pflanzenbestandsdichte ermittelbar ist, und dass aufgrund eines Fehlergangs am Sensor (1) softwaremäßig über eine Filterung fehlerhafte Signale ausblendbar sind.

2. Vorrichtung nach Anspruch 1, **dadurch gekennzeichnet, dass** in dem Auswerteprogramm ein statistisches Verhältnis zwischen Anzahl "Boden"-Signale und "Pflanzen"-Signale abgelegt ist und anhand dieses hinterlegten Verhältnisses durch den Abgleich mit den aktuell ermittelten Verhältnissen die tatsächliche Bestandsdichte online ermittelt und aufgrund der online ermittelten Werte mittels eines hinterlegten Programms die Verteilmaschine (2) entsprechend einstellbar ist.

3. Vorrichtung nach Anspruch 2, **dadurch gekennzeichnet, dass** aus der ermittelten Bestandsdichte mittels des hinterlegten Programms der standortspezifische Düngerbedarf ermittelbar ist, und dass die Verteilmaschine (2) entsprechend einstellbar ist.

4. Vorrichtung nach Anspruch 1, **dadurch gekennzeichnet, dass** der Sensor (1) als Triangulationssensor ausgebildet ist.

5. Vorrichtung nach Anspruch 1, **dadurch gekennzeichnet, dass** der Sensor (1) als Laufzeitsensor ausgebildet ist.

6. Vorrichtung nach Anspruch 1, **dadurch gekennzeichnet, dass** der Sensor (1) als Scanner ausgebildet ist.

7. Vorrichtung nach Anspruch 1, **dadurch gekennzeichnet, dass** der Sensor (1) als Lasersensor ausgebildet ist.

8. Vorrichtung nach Anspruch 1, **dadurch gekennzeichnet, dass** mehrere Sensoren (1) vorgesehen sind.

## Claims

1. Apparatus for measuring the density of the vegetation, more especially for measuring the foliage of the vegetation in an agricultural crop area for controlling and/or regulating an agricultural distributor (2), wherein the apparatus includes at least one sensor (1), which supplies signals to an on-board computer, with a transmitter (6) and a receiver (13), wherein the sensor (1) is in the form of an optoelectronic distance sensor, **characterised in that** the absolute height of the vegetation (6, 6') is determinable by means of the sensor (1), **in that** the density of the vegetation is determinable from the signals by means of an evaluating program that is stored in a storage medium in the on-board computer, and **in that** if there is an error reading at the sensor (1), the software makes it possible to suppress faulty signals by means of filtering.

2. Apparatus according to claim 1, **characterised in that** a statistical ratio between the number of "ground" signals and "plant" signals is stored in the evaluating program and by way of the said stored ratios, through comparison with the currently determined ratios, the actual density of the vegetation is determined online and, on account of the values determined online, the distributor (2) is correspondingly adjustable by means of a stored program.

3. Apparatus according to claim 2, **characterised in that** the location-specific fertiliser requirement is determinable from the density of the vegetation determined by means of the stored program, and **in that** the distributor (2) is correspondingly adjustable.

4. Apparatus according to claim 1, **characterised in that** the sensor (1) is in the form of a triangulation sensor.

5. Apparatus according to claim 1, **characterised in that** the sensor (1) is in the form of a run-time sensor.

6. Apparatus according to claim 1, **characterised in that** the sensor (1) is in the form of a scanner.

7. Apparatus according to claim 1, **characterised in that** the sensor (1) is in the form of a laser sensor.

8. Apparatus according to claim 1, **characterised in that** a plurality of sensors (1) are provided.

## Revendications

1. Dispositif de mesure de la densité de la couverture végétale notamment de la masse verte d'une couverture végétale d'une surface végétale agricole, pour commander et/ou réguler un épandeur agricole (2) selon lequel,
le dispositif comporte au moins un capteur (1) fournissant des signaux à l'ordinateur embarqué et comportant un émetteur (6) et un récepteur (13),
le capteur (1) étant un capteur de distance optoélectronique,
**caractérisé en ce qu'**
à l'aide du capteur (1) on détermine la hauteur absolue de la plantation (b, b'),
à partir des signaux et avec un programme d'exploitation enregistré dans une mémoire de l'ordinateur embarqué, on détermine la densité de la couverture végétale, et
par une sortie de départ du capteur (1) on élimine par filtrage par programme les signaux défectueux.

2. Dispositif selon la revendication 1,
**caractérisé en ce que**
le programme d'exploitation contient un rapport statistique entre le nombre de signaux du sol et le nombre de signaux des plantes et à partir du rapport ainsi enregistré et par comparaison avec les rapports déterminés actuellement, on obtient en ligne la densité de la couverture végétale effective et à partir des valeurs déterminées en ligne avec un programme enregistré, on règle l'épandeur (2) de manière correspondante.

3. Dispositif selon la revendication 2,
**caractérisé en ce qu'**
à partir de la densité obtenue de la couverture végétale à l'aide du programme enregistré, on détermine la demande d'engrais spécifique à chaque endroit et on règle l'épandeur (2) de manière correspondante.

4. Dispositif selon la revendication 1,
**caractérisé en ce que**
le capteur (1) est un capteur de triangulation.

5. Dispositif selon la revendication 1,
**caractérisé en ce que**
le capteur (1) est un capteur de temps de parcours.

6. Dispositif selon la revendication 1,
**caractérisé en ce que**
le capteur (1) est un scanner.

7. Dispositif selon la revendication 1,
**caractérisé en ce que**
le capteur (1) est un capteur laser.

8. Dispositif selon la revendication 1,
**caractérisé en ce qu'**
il comporte plusieurs capteurs (1).
